# EUROPEAN PATENT APPLICATION

(11) **EP 2 003 634 A2**
(43) Date of publication of application: **17.12.2008**
(21) Application number: 07712550.8
(22) Date of filing: 01.02.2007
(51) Int. Cl.: G09C 5/00, B42D 15/02

(54) **SECRET CODE MEDIUM**

(30) Priority: 17.02.2006 ES 200600355
(71) Applicant: Soriano Iniesta, Fernando, E-Alcobendas (Madrid) (ES)
(72) Inventor: Soriano Iniesta, Fernando, E-Alcobendas (Madrid) (ES)
(74) Representative: Gonzalez Palmero, Fé
(86) International application number: PCT/ES2007/000056
(87) International publication number: WO 2007/093652

(57) **Abstract**

The invention relates to a secret code medium consisting of a sheet of transparent plastic having a broken peripheral cut or punched line defining a wide central card and a peripheral frame. The invention is **characterised in that** the peripheral frame is fixed to a base sheet using an adhesive which serves to indicate any manipulation, while the card can be easily detached by tearing along the punched peripheral line such that the information contained thereon can be detected when it is separated from the base sheet.

## Description

### OBJECT OF THE INVENTION

The present invention relates to a medium that has been especially devised to store a secret code, such as, for example, a telephone PIN number, the personal number of a credit card, etc., ensuring the user thereof, when they receive it, that the secret information contained in said medium has remained inaccessible.

The object of the invention is to achieve a medium that, in addition to fulfilling the basic function previously mentioned in a completely satisfactory manner, it allows the printing of the code to be performed by laser systems and that the reading of the code by the recipient thereof can be done in optimal conditions.

### BACKGROUND OF THE INVENTION

There are multiple solutions to store a secret code, as long as they are printed by conventional means. The same cannot be said when dealing with a laser printing, wherein the number of solutions is much lower.

One of such solutions consists of using two superimposed sheets, a base sheet, of any type of suitable paper, and a top sheet, of plastic and transparent nature, which is the bearer of the secret code, while the base sheet features a camouflage background for said code, which makes the latter invisible as long as the separation of the two sheets does not occur.

This solution entails a problem which is fundamentally centred on the following aspects:
- For the secret code not to be directly legible, the printing thereof must be very faint, which makes the visualization thereof very difficult once the base sheet has been detached.
- For proof to remain against a supposed violation of the medium, an adhesive of special characteristics is applied so that when the plastic sheet is attached back to the base sheet, the background adopts a whitish shade which shows the manipulation, which makes the manufacturing of the product substantially more expensive.

### DESCRIPTION OF THE INVENTION

The medium for secret codes proposed by the invention, belonging to the group of those above-mentioned, i.e. to the group of those which allow for the printing of the code by laser system on the frontal or outer side thereof, resolves the previously stated problem, in the two aspects mentioned, in a fully satisfactory manner, ensuring a perfectly clear visualisation in optimal conditions of the secret code whereof it is the bearer, additionally ensuring proof of any improper manipulation thereof, and all of this without the need to use special adhesives which make the product more expensive.

Consequently, and more specifically, the medium proposed consists of a base sheet, which can be of paper, of plastic or any other suitable material, whereupon is attached frontally a transparent, plastic sheet, which, as has just been mentioned, bears on its frontal side the secret code engraved by means of laser or ink-jet printing, with the special feature that said transparent, plastic sheet is provided with a perimeter die stamp which defines an immovable frame attached to the base sheet, for example, by means of an adhesive which indicates the detachment, and a central card, which is what carries the code, and to be able to remove it from the frame, through a tab functionally established for this purpose, it must be torn away with respect to said frame, which is proved by the manoeuvre in question.

This card can be joined to the rest of the medium simply through the aforementioned die-stamped perimeter line, or can be assisted by an adhesive layer which permits an easy detachment thereof.

In any case, and in accordance with an essential characteristic of the invention, the code will come materialized in laser or ink-jet printings of the same intense colour as the background defined by the base sheet, so that said code will be perfectly visible when the removal of the card occurs.

Nonetheless, and so that no possibility exists of detection of said code when the medium is intact, it has been provided that the aforementioned card has folding lines, so that the code is broken down, i.e. fragmented in portions with which the card pulled out are absolutely indecipherable, but when the card is folded upon itself along the abovementioned folding lines, they combine to clearly show the aforementioned code.

In this way, in accordance with the objective of the invention, a secure and efficient medium is achieved, with optimal benefits.

### DESCRIPTION OF THE DRAWINGS

In order to complement the description being carried out and with the purpose of helping towards a better understanding of the characteristics of the invention, in accordance with a preferred example of embodiment thereof, a set of drawings is attached as an integral part of said description, wherein the following, in an illustrative and non-limitative character, has been represented:
Figure 1.- Shows, according to a schematic plan view, a medium for secret codes carried out in accordance with the object of the present invention.
Figure 2.- Shows a cross-sectioned, longitudinal profile of the medium of the previous figure.
Figure 3.- Shows a cross-section similar to that of figure 2 in the separation phase from the card bearing the code.
Figure 4.- Shows, finally and according to a perspective view, the card of the previous figure duly folded upon itself in order to be able to gain access to the code whereof it is the bearer.

### PREFERRED EMBODIMENT OF THE INVENTION

In light of the figures shown, it can be observed how the medium proposed by the invention consists of a base sheet (1), which can have the rectangular configuration of the figures or any other which is deemed convenient, and which can be of paper, cardboard, plastic or any other suitable material, with an intense background on the internal side (2) thereof to hide or camouflage the key or code (3), which will be described later on.

On this base sheet (1) is a transparent, plastic sheet (4), of a coinciding shape and size, transparent sheet wherein a core or card is defined which corresponds to the information (4) and which mainly affects it, and a perimeter frame (5), so that while said frame (5) is joined immovably to the base sheet (1) with the collaboration of an adhesive (6) of suitable characteristics, which proves a possible detachment and impedes a new attachment between both sheets, the central card (4) can even lack fixation adhesive, or be attached to the base sheet (1) with an easily detachable adhesive (7), while the attachment for said card (4) is determined by the die-stamped or pre-cut line (8) which connects it to the frame (5), so that the only way of removing the card (4) from the frame (5) is by tearing it at said die-stamped line (8).

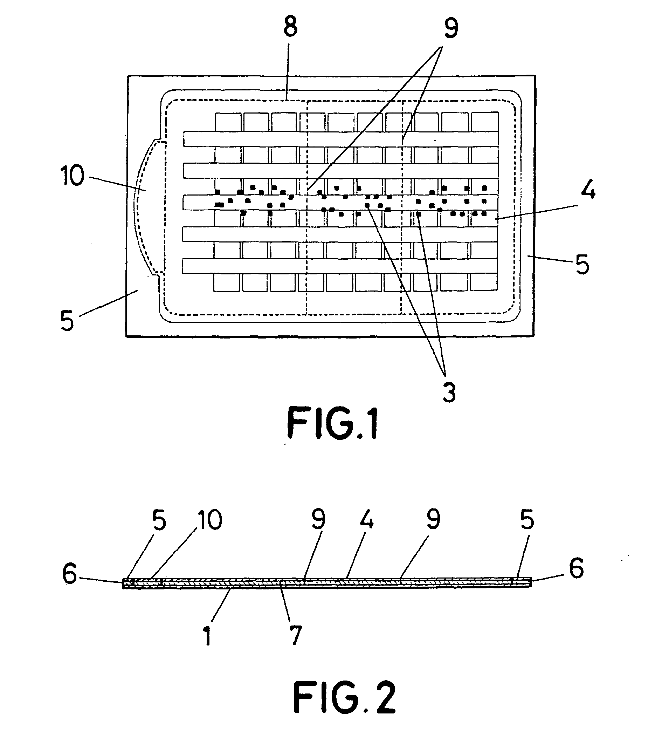

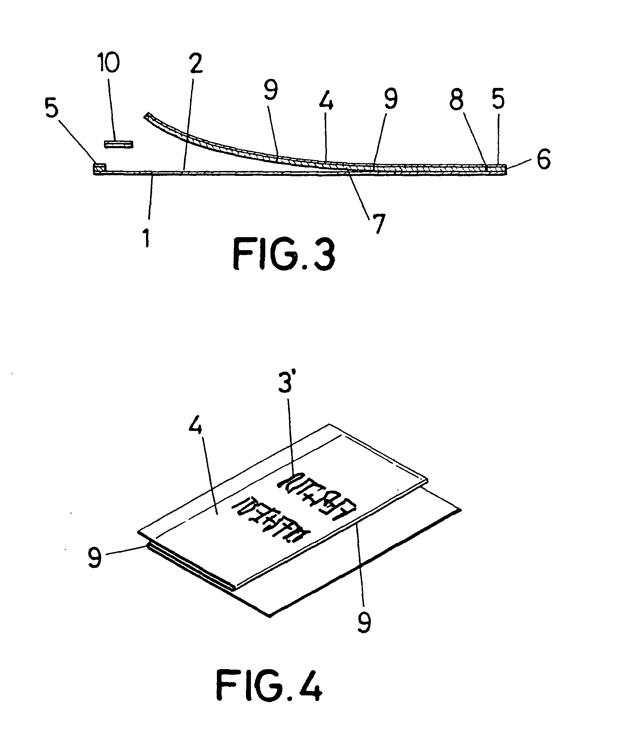

In accordance with a practical embodiment wherein the background (2) of the base sheet (1) is black, the code (3) will also be black, and will be materialized in minute motifs broken up and shared out by the card (4) which after the separation thereof continues to hide the key, the card (4) including folding lines (9), such as the two shown in figure 1, which allow for the folding of the card upon itself, as is shown in figure 4, folding wherein the different unitary motifs (3) constituting the broken up key are put together in order to show a perfectly legible key (3') which is only accessible by means of separation by tearing of the card (4) and subsequent folding thereof.

In order to aid the detachment manoeuvre of the card (4) with respect to the base sheet (1), said card (4) features a tab (10) which in turn facilitates the manual gripping of said card.

## Claims

1. ^{a}.- Medium for secret codes, of the type of those constituted by means of the operational combination of an opaque base sheet, and a transparent sheet attached to the previous one, so that on the base sheet is established a background visible through the transparent sheet which hides the printed key by means of laser or ink-jet on said transparent sheet, **characterised in that** the transparent, plastic sheet is cut into by a perimeter die-stamped or discontinuous cut line which defines therein a wide central card and a perimeter frame, with the special feature that said perimeter frame is immovable attached to the base sheet with an adhesive which indicates any manipulation regarding the separation between both elements, or the frame is cut into by multi-cuts which indicate said manipulation, while the card is easily removable by means of tearing along the die-stamped perimeter line, in order to be able to detect the information whereof it is the bearer when separated from the base sheet.

2. ^{a}.- Medium for secret codes, according to claim 1, **characterised in that** the tearable card is attached to the base sheet by means of an adhesive which facilitates the detachment thereof, or simply resting upon itself in absence of adhesive.

3. ^{a}.- Medium for secret codes, according to previous claims, **characterised in that** the card which configures a transparent, plastic sheet includes transversal folding lines, which allow for the folding of said card upon itself, with the special feature that the laser or ink-jet printings corresponding to the code are broken up and shared out by the sections defined on the card by the aforementioned folding lines, so that the putting together of the key is automatically produced when the card is folded upon itself along said folding lines.

4. ^{a}.- Medium for secret codes, according to previous claims, **characterised in that** the motifs included in the code are, in addition to being the same colour as the background established on the base sheet, of a single strong chromatic intensity.
